# EUROPÄISCHE PATENTANMELDUNG

(11) **EP 2 224 111 A1**
(43) Veröffentlichungstag der Anmeldung: **01.09.2010**
(21) Anmeldenummer: 10153516.9
(22) Anmeldetag: 12.02.2010
(51) Int. Cl.: F02B 29/04, F28F 9/02, F28F 9/04, F28F 9/08, F28F 9/12, F28F 9/14

(54) **Auflademodul, Aufladesystem und Brennkraftmaschine**

(30) Priorität: 25.02.2009 DE 102009010333
(71) Anmelder: Behr GmbH & Co. KG, 70469 Stuttgart (DE)
(72) Erfinder: Haßdenteufel, Klaus, 70839 Gerlingen (DE); Diem, Johannes, 71287 Weissach (DE)
(74) Vertreter: Grauel, Andreas

(57) **Zusammenfassung**

Die Erfindung betrifft ein Auflademodul (10, 20) für ein Aufladesystem (100) einer Brennkraftmaschine (110), aufweisend ein Saugrohr für ein Ladefluid, insbesondere Abgas und/oder Ladeluft, und einen im Saugrohr integrierten Wärmetauscher (4), wobei das Saugrohr ein Saugrohrgehäuse (2) mit einem ersten Teil (2.1) und einem zweiten Teil (2.2) aufweist und der Wärmetauscher (4) unter Presskraftwirkung (Fₚ) zwischen dem ersten Teil (2.1) und dem zweiten Teil (2.2) gehalten ist.

## Beschreibung

Die Erfindung betrifft ein Auflademodul für ein Aufladesystem einer Brennkraftmaschine, aufweisend ein Saugrohr für ein Ladefluid und einen im Saugrohr integrierten Wärmetauscher. Die Erfindung betrifft weiter ein Aufladesystem für eine Brennkraftmaschine mit einem Auflademodul der genannten Art sowie ein Brennkraftsystem mit einem Aufladesystem der genannten Art und einer Brennkraftmaschine.

Für Brennkraftmaschinen wie z.B. einem Otto-Motor oder einem DieselMotor od.dgl. ist häufig ein Aufladesystem vorgesehen, mit dem ein Ladefluid - beispielsweise ein Abgas, eine Ladeluft oder ein Abgas-Ladeluftgemisch - der Brennkraftmaschine in komprimierter Form im Betrieb zugeführt wird. Dies führt nicht nur zu einer Leistungssteigerung, sondern auch zur Senkung des Kraftstoffverbrauchs und zur Senkung einer Schadstoffemission der Brennkraftmaschine. Um solche und andere Betriebsparameter der Brennkraftmaschine zu optimieren, ist es regelmäßig erforderlich, das durch die Verdichtung im Aufladesystem erhitzte Ladefluid unter möglichst geringem Druckverlust zu kühlen.

Dazu hat es sich bei fortschrittlichen Aufladesystemen durchgesetzt, einen Wärmetauscher, wie einen Abgas- und/oder Ladeluftkühler od.dgl., bei einem Auflademodul des Aufladesystems der eingangs genannten Art im Saugrohr zu integrieren. Als problematisch hat sich dabei erwiesen, den Wärmetauscher einerseits herstellungsgünstig zu integrieren und andererseits für den Betrieb des Auflademoduls eine sichere Lagerung des Wärmetauschers im Saugrohr zu gewährleisten.

Dazu ist es bekannt, einen Wärmetauscher an einer Innenseite des Saugrohres, beispielsweise über eine Halteplatte, einseitig fest anzuflanschen, Dazu ist es regelmäßig notwendig, zum einen in aufwändiger Weise die Flansch-Halterung durchzuführen und zum anderen vergleichsweise komplizierte Dichtungsmaßnahmen vorzunehmen, um einen leckagefreien Betrieb des flanschgehalterten Wärmetauschers im Saugrohr des Auflademoduls zu gewährleisten.

Wünschenswert wäre es, die vorgenannten Probleme unter vergleichsweise günstigen Herstellungsbedingungen und vergleichsweise einfachen Maßnahmen zu beseitigen.

An dieser Stelle setzt die Erfindung an, deren Aufgabe es ist, ein Auflademodul, ein Aufladesystem und eine Brennkraftmaschine anzugeben, bei weicher ein Wärmetauscher vergleichsweise einfach und dennoch betriebssicher im Saugrohr des Auflademoduls integriert werden kann. Insbesondere sollte zum einen ein Wärmetauscher auch bei betriebsbedingten Verformungen des Saugrohres mechanisch sicher, d.h. insbesondere ortsfest, gehalten sein und zum anderen sollte gewährleistet sein, dass das Ladefluid vollständig dem Wärmetauscher zugeführt wird, d.h. es sollte eine leckagefreie Halterung des Wärmetauschers gegeben sein.

Betreffend das Auflademodul wird die Aufgabe durch die Erfindung mittels eines Auflademoduls der eingangs genannten Art gelöst, bei welchem erfindungsgemäß das Saugrohr ein Saugrohrgehäuse mit einem ersten Teil und einem zweiten Teil aufweist und der Wärmetauscher unter Presskraftwirkung zwischen dem ersten Teil und dem zweiten Teil gehalten ist.

Die Erfindung geht von der Überlegung aus, dass die Beseitigung von Anbringmitteln, wie Flanschen od.dgl., im Saugrohr zu einer vorteilhaften Lösung der Aufgabe führt. Die Erfindung hat erkannt, dass ein unter Presskraftwirkung zwischen dem ersten und dem zweiten Teil des Saugrohtgehäuses gehaltener Wärmetauscher praktisch frei von Anbringmitteln im Saugrohr integriert ist. Der Wärmetauscher kann insbesondere ein Abgasküler und/oder Ladeluftkühler sein,

Das Konzept der Erfindung hat den Vorteil, dass die Auslegung der Presskraft je nach Erfordernissen des Betriebs des Auflademoduls erfolgen kann. So ist die Presskraft einerseits so hoch auslegbar, dass ein Verrücken des Wärmetauschers im Betrieb, insbesondere beispielsweise durch die Wirkung eines Ladeluftdrucks, verhindert ist, Zum anderen ist die Presskraft auch so hoch ausgelegt, dass selbst bei einer betriebsbedingten Verformung des Gehäuses, beispielsweise durch Temperaturänderung od.dgl., die Halterung des Wärmetauschers im Saugrohrgehäuse gewährleistet ist, So ist beispielsweise bei einer Temperaturerhöhung von einer betriebsbedingten leichten Volumenvergrößerung des Gehäuses auszugehen, was zu einer tolerierbaren Verringerung der Presskraft führen könnte; die genügend hohe Auslegung der Presskraft gewährleistet dennoch, dass eine Presskraftwirkung zwischen dern ersten Teil und dem zweiten Teil zur sicheren Halterung des Wärmetauschers ausreichend gewährleistet ist.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Gemäß einer besonders bevorzugten Weiterbildung ist das erste und zweite Teil des Saugrohrgehäuses unter Erzeugung der Presskraftwirkung auf den Wärmetauscher derart gegeneinander verspannt, dass eine Presshalterung des Wärmetauschers erfolgt. Eine Verspannung des ersten und zweiten Teils kann ohne Probleme während der Herstellung durch Aneinanderfügen des ersten und zweiten Teils erfolgen, Beispielsweise kann die Presskraft durch Schweißen des ersten und zweiten Teils unter Spannung erfolgen,

Vorteilhaft ist der Wärmetauscher über ein Halte- und/oder Lagermittel gehalten und/oder gelagert - zur Gewährleistung der Presskraftwirkung zwischen dem ersten und dem zweiten Teil ist der Wärmetauscher insbesondere zweiseitig gehalten und/oder gelagert. Dies stellt einen erheblichen Vorteil gegenüber der üblicherweise im Stand der Technik vorgesehenen einseitigen Lagerung dar.

Vorteilhaft ist ein Lagermittel in Form Lagerung und/oder Dichtung gebildet. Es hat sich vor allem gezeigt, dass eine Dichtung zwischen dem Wärmetauscher und dem ersten und/oder zweiten Teil des Gehäuses so ausgelegt werden kann, dass diese einerseits die Presskraftwirkung auf den Wärmetauscher und andererseits eine ausreichende Dichtwirkung entfalten kann. Im Rahmen einer bevorzugten Weiterblidung ist somit ein Lagermittel vorgesehen, das neben der Presskraftwirkung auch eine Dichtwirkung auf den Wärmetauscher ausübt. Darüber hinaus hat es sich a!s vorteilhaft erwiesen, das Lagermittel gemäß dem Konzept der Erfindung derart auszulegen, dass eine Betriebsverformung des Gehäuses kompensierbar ist, Zusätzlich oder alternativ kann ein dafür vorgesehenes Kompensationsmittel vorgesehen sein, weiches in der Lage ist, Abstandsänderungen zwischen Gehäuse und Wärmetauscher auszugleichen, Es hat sich gezeigt, dass insbesondere eine Dichtung sowohl eine Lagerfunktion als auch eine Dichtfunktion als auch eine Kompensationsfunktion ausführen kann. Dazu ist die Dicke der Dichtung vorteilhaft angepasst.

Als vorteilhaft zur Lagerung des Wärmetauschers hat sich vor allem eine flächige Lagerung erwiesen. Vorteilhaft ist z.B. eine Dichtmatte. Zusätzlich oder alternativ können auch Linienlagerungen oder Punktlagerungen vorgesehen sein.

Fortschrittliche Saugrohrgehäuse sind vorteilhaft aus Kunststoff gefertigt. Dies hat den Vorteil, dass das erste und das zweite Teil besonders vorteilhaft anetnandergefügt werden können, insbesondere aneinandergeschweißt werden können. Im Rahmen dieser Weiterbildung hat sich insbesondere eine Reibschweißung zwischen dem ersten und dem zweiten Teil als vorteilhaft erwiesen.

Eine Fügenaht, insbesondere Schweißnaht, zwischen dem ersten und dem zweien Teil verläuft vorteilhaft derart, dass der Wärmetauscher in eines der Gehäuseteile einsetzbar ist und unter Presskraftwirkung zwischen dem ersten und dem zweiten Teil des Gehäuses haltbar ist. Insbesondere führt dies dazu, dass der Umfangsverlauf einer Fügenaht so groß gewählt ist, dass während der Herstellung des Auflademoduls der Wärmetauscher als Ganzes durch den Umfang eingesetzt werden kann.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen. Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1: eine schematische Darstellung eines Brennkraftsystems mit ei- nem Aufladesystem für eine Brennkraftmaschine mit einem Auf- lademodul gemäß einer bevorzugten Ausführungsform der Er- findung:
- Fig. 2 ein: Auflademodul für ein Aufladesystem einer Brennkraftma- schine, beispielsweise ein allgemein dargestelltes Aufladesys- tem der Fig. 1, gemäß einer ersten bevorzugten Ausführungs- form:
- Fig. 3: ein Auflademodul für ein Aufladesystem einer Brennkraftma- schine, beispielsweise ein allgemein dargestelltes Aufladesys- tem der Fig. 1, gemäß einer zweiten bevorzugten Ausführungs- form.

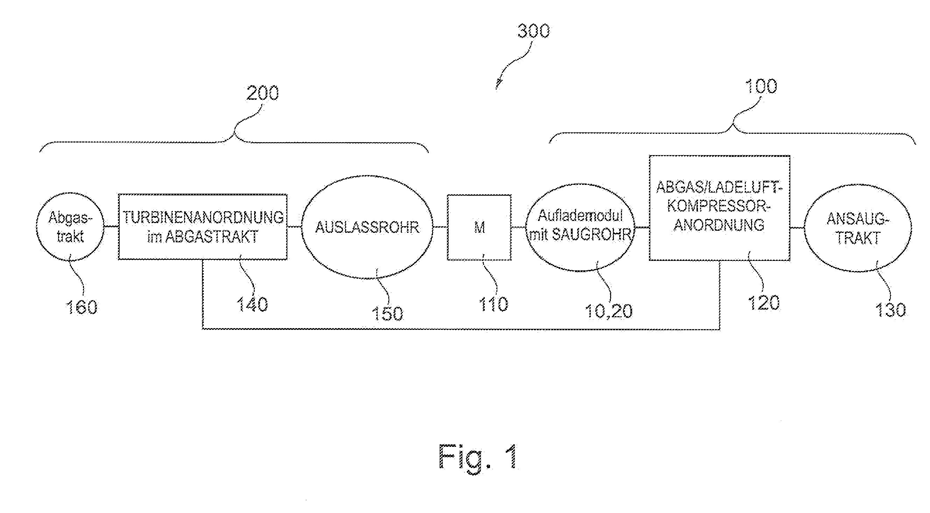

Fig. 1 zeigt in schematischer Form ein Brennkraftsystem 300 mit einer Brennkraftmaschine 110, einem Abgassystem 200 und mit einem Aufladesystem 100 für die Brennkraftmaschine 110. Der Brennkraftmaschine 110 vorgeschaltet ist eine Abgas/Ladeluft-Kompressoranordnung 120 mit einem vorgeschalteten Ansaugtrakt 130, Zwischen dem Motor 110 und der Abgas/Ladeluft-Kompressoranordnung 120 ist ein Auflademodul 10, 20, wie es im Folgenden erläutert wird, angeordnet. Dem Motor 110 nachgeschaltet ist eine Turbinenanordnung 140, welche mit dem Motor 110 über ein Auslassmodul 150 verbunden ist und zum Antrieb eines Kompressors der Anordnung 120 genutzt werden kann. Der Turbinenanordnung 140 nachgeschaltet istderAbgastrakt 160.

Gleiche Teile bzw. Teile gleicher Funktion sind vorliegend mit gleichen Bezugszeichen versehen.

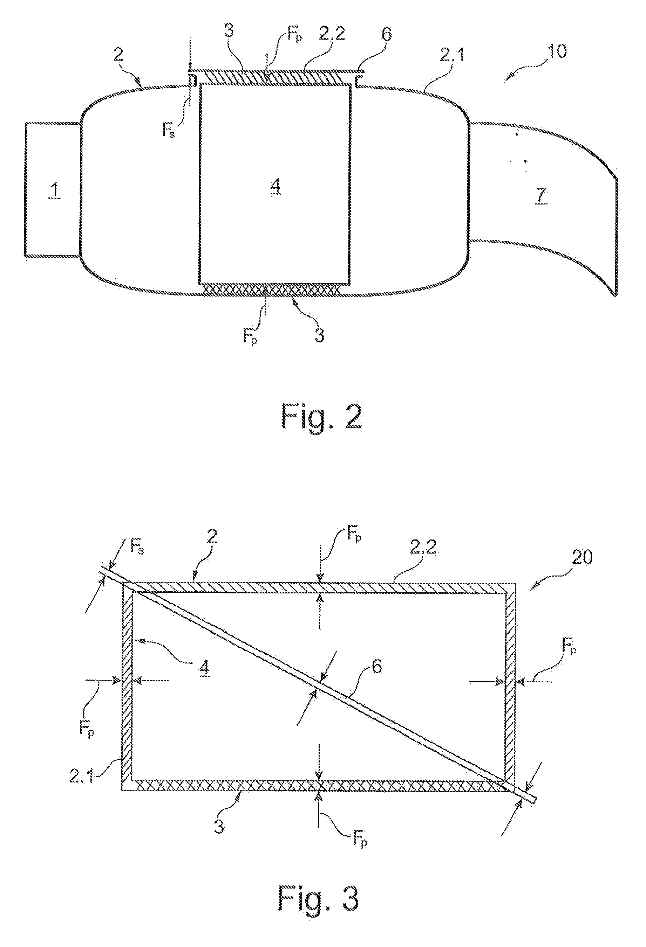

Fig. 2 zeigt eine erste Ausfuhrungsform eines Auflademoduls 10. Dieses weist ein Saugrohr aus Kunststoff mit integriertem Wärmetauscher 4 in Form eines Ladeluftkühlers auf. Ein Stutzen 1 führt zu einer nicht näher dargestellten Drosselklappe, Zu dem Zylinder der Brennkraftnisschine 110 führen Schwingrohre 7.

Vorliegend ist der Wärmetauscher 4 zwischen einem ersten als Basisgehäuse ausgebildeten Teil 2.1 des Saugrohrgehäuses 2 und einem zweiten als Deckel ausgebildeten Teil 2.2 des Saugrohrgehäuses 2 unter Presskraftwirkung Fₚ gelagert Das erste Teil 2.1 und das zweite Teil 2.2 sind vorliegend unter Spannung Fₛ durch eine Reibschweißnaht 6 aneinandergefügt.

Die Presskraftwirkung Fₚ wird zusammen mit einer Lagerwirkung und einer Dichtwirkung vorliegend in vorteilhafter Weise durch eine Dichtmatte 3 erreicht, welche zwischen dem ersten Teil 2.1 und Wärmetauscher 4 einerseits und zwischen dem zweiten Teil 2,2 und dem Wärmetauscher 4 andererseits angeordnet ist.

Fig. 3 zeigt eine zweite bevorzugte Ausführungsform eines Auflademoduls 20, weiches wiederum einen im Saugrohr integrieren Wärmetauscher 4 aufweist. Der Wärmetauscher 4 und das Saugrohrgehäuse 2 haben vorliegend eine aufeinander abgestimmte rechteckige Form. Das Saugrohrgehäuse 2 ist vorliegend aus einem im Querschnitt dreieckförmigen Gehäuseunterteil als erstes Teil 2.1 und aus einem im Querschnitt dreieckförmigen Gehäuseoberteil als zweites Teil 2.2 ausgeführt. Die Gesamtform des Kunststoffsaugrohrgehäuses 2 ist vorliegend zur Ausbildung des ersten Teils 2.1 und des zweiten Teils 2.2 mit einer Diagonal-Fügenaht 6, vorliegend Diagonal-Schweißnaht, unter Spannung Fₛ ausgeführt

Wiederum ist zwischen dem Saugrohrgehäuse 2 und dem Wärmetauscher 4 eine Dichtmatte 3 angeordnet, welche nicht nur eine Dichtwirkung, sondern darüber hinaus auch eine Lagerwirkung und Presskraftwirkung Fₚ auf den Wärmetauscher 4 ausübt.

Die Volumenvarianz der Dichtmatte 3 ist vorliegend derart ausgelegt, dass selbst bei betriebsbedingten Verformungen des Gehäuses sowohl die Presskraftwirkung Fₚ als auch die Dichtwirkung ausreichend zwischen dem Saugrohrgehäuse 2 und dem Wärmetauscher 4 gewährleistet ist.

Zusammenfassend betrifft die Erfindung ein Auflademodul 10, 20 für ein Aufladesystem 100 einer Brennkraftmaschine 110, aufweisend ein Saugrohr für ein Ladefluid, insbesondere Abgas und/oder Ladeluft, und einen im Saugrohr integrierten Wärmetauscher 4, wobei das Saugrohr ein Saugrohrgehäuse 2 mit einem ersten Teil 2.1 und einem zweiten Teil. 2.2 aufweist und der Wärmetauscher 4 unter Presskraftwirkung zwischen dem ersten Teil 2,1 und dem zweiten Teil 2,2 gehalten ist.

### Bezugszeichenliste

- 1: Stutzen
- 2: Kunststoffsaugrohrgehäuse
- 3: Dichtmatte
- 2.1: erstes Teil
- 2,2: zweites Teil
- 4: Wärmetauscher
- 6: Reib-Schweiß-Naht
- 7: Schwingrohre
- 10: Auflademodul
- 20: Auflademodul
- 100: Aufladesystem
- 110: Brennkraftmaschine
- 120: Abgas/Ladeluftkompressoranordnung
- 130: Ansaugtakt
- 140: Turbinenanordnung
- 150: Auslassmodul
- 160: Abgastrakt
- 200: Abgassystem
- 300: Brennkraftsystem

- Fₚ: Presskraftwsirkung
- F₅: Spannung

## Patentansprüche

1. Auflademodul (10, 20) für ein Aufladesystem (100) einer Brennkraftmaschine (110), aufweisend ein Saugrohr für ein Ladefluid, insbesondere Abgas und/oder Ladeluft, und einen im Saugrohr integrierten Wärmetauscher (4),
**dadurch gekennzeichnet, dass**
das Saugrohr ein Saugrohrgehäuse (2) mit einem ersten Teil (2,1) und einem zweiten Teil (2.2) aufweist und der Wärmetauscher (4) unter Presskraftwirkung (Fₚ) zwischen dem ersten Teil (2,1) und dem zweiten Teil (2.2) gehalten ist

2. Auflademodul (10, 20) nach Anspruch 1
**dadurch gekennzeichnet, dass**
das erste und zweite Teil (2.1, 2.2) unter Erzeugung der Presskraftwirkung (Fₚ) auf den Wärmetauscher (4) derart gegen einander verspannt sind, dass eine Presshalterung des Wärmetauschers (4) erfolgt,

3. Auflademodul (10, 20) nach Anspruch 1 oder 2
**dadurch gekennzeichnet, dass**
der Wärmetauscher (4) über ein Haltemittel und/oder Lagermittel gehalten und/oder gelagert ist, insbesondere zweiseitig gehalten und/oder gelagert ist.

4. Auflademodul (10, 20) nach einem der Ansprüche 1 bis 3
**dadurch gekennzeichnet, dass**
wenigstens eines der Teile (2.1, 2,2) des Saugrohrgehäuses (2) aus Kunststoff ist,

5. Auflademodul (10, 20) nach einem der Ansprüche 1 bis 4
**dadurch gekennzeichnet, dass**
das erste und das zweite Teil (2.1, 2.2) aneinander gefügt, insbesondere aneinander geschweißt, insbesondere reibgeschweißt, sind,

6. Auflademodul (10, 20) nach einem der Ansprüche 1 bis 5
**dadurch gekennzeichnet, dass**
eine Fügenaht (6) zwischen dem ersten und dem zweiten Teil (2.1, 2.2) derart verläuft, dass der Wärmetauscher (4) in eines der Teile (2.1, 2.2) ersetzbar ist und unter Presskraftwirkung (Fₚ) zwischen dem ersten Teil und dem zweiten Teil (2.1, 2.2) haltbar ist.

7. Auflademodul (10, 20) nach einem der Ansprüche 1 bis 6
**dadurch gekennzeichnet, dass**
eine Presskraftwirkung (Fₚ) über eine Halterung und/oder Lagerung erfolgt, welche eine flächige Presskraftübertragung auf den Wärmetauscher (4) bewirkt, insbesondere eine Pressfläche aufweist.

8. Auflademodul (10, 20) nach einem der Ansprüche 1 bis 7
**dadurch gekennzeichnet, dass**
eine Presskraftwirkung (Fₚ) über eine Halterung und/oder Lagerung erfolgt, welche eine linienförmige und/oder punktförmige Pressktaftübertragung auf den Wärmetauscher (4) bewirkt, insbesondere eine Presslinie und/oder einen Presspunkt aufweist

9. Auflademodul (10, 20) nach einem der Anspruche 1 bis 8
**dadurch gekennzeichnet, dass**
eine Halterung und/oder Lagerung Abstützelemente wie Stützflächen, Stege, Stützpunkte od.dgl, aufweist.

10. Auflademodul (10, 20) nach einem der Ansprüche 1 bis 9
**dadurch gekennzeichnet, dass**
eine Presskraftwirkung (Fₚ) über eine Halterung und/oder Lagerung erfolgt, welche derart ausgelegt ist, dass eine Betriebsverformung des Saugrohrgehäuses (2) kompensierbar ist, insbesondere ein Kompensationsmittel aufweist.

11. Auflademodul (10, 20) nach einem der Ansprüche 1 bis 10
**dadurch gekennzeichnet, dass**
zwischen dem ersten und/oder zweiten Teil (2.1, 2.2) des Saugrohrgehäuses (2) und dem Wärmetauscher (4) eine Dichtung, insbesondere eine Dichtmatte (3) oder Dichtleiste od.dgl., angeordnet ist.

12. Auflademodul (10, 20) nach einem der Ansprüche 1 bis 11
**dadurch gekennzeichnet, dass**
eine Presskraftwirkung über eine Halterung und/oder Lagerung erfolgt, welche eine Presskraftübertragung auf den Wärmetauscher (4) bewirkt und eine Dichtwirkung hat, insbesondere in Form einer Dichtung gebildet ist.

13. Auflademodul (10, 20) nach einem der Ansprüche 1 bis 12
**dadurch gekennzeichnet, dass**
der Wärmetauscher (4) unter Presskraftwirkung zwischen dem ersten Teil (2.1) und dem zweiten Teil (2.2) eingespritzt ist.

14. Aufladesystem (100) für eine Brennkraftmaschine (110) mit einem Auflademodul (10, 20) nach einem der Ansprüche 1 bis 13.

15. Brennkraftsystem (300) mit einem Aufladesystem (100) nach Anspruch 14 und einer Brennkraftmaschine (110), insbesondere einem Motor, wie einem Otto-Motor oder einem Dieselmotor od.dgl. und einem Abgassystem (200).
